# EUROPEAN PATENT SPECIFICATION

(11) **EP 4 211 022 B1**
(45) Date of publication and mention of the grant of the patent: **11.11.2026**
(21) Application number: 21777436.3
(22) Date of filing: 09.09.2021
(51) Int. Cl.: B62D 15/02, B60W 30/12

(54) **CONTROLLER AND METHOD FOR GENERATION OF STEERING OVERLAY SIGNAL**
STEUERGERÄT UND VERFAHREN ZUR ERZEUGUNG EINES LENKÜBERLAGERUNGSSIGNALS
DISPOSITIF DE COMMANDE ET PROCÉDÉ DE GÉNÉRATION D'UN SIGNAL DE SUPERPOSITION DE DIRECTION

(30) Priority: 09.09.2020 GB 202014163
(43) Date of publication of application: 19.07.2023
(73) Proprietor: Jaguar Land Rover Limited, Coventry, Warwickshire CV3 4LF (GB)
(72) Inventor: CALDWELL, Robyn, Coventry Warwickshire CV3 4LF (GB); FUSCONI, Denis, Coventry Warwickshire CV3 4LF (GB)
(74) Representative: Jaguar Land Rover Patents Department
(86) International application number: PCT/EP2021/074836
(87) International publication number: WO 2022/053566

(56) References cited:
- GB-A- 2 512 317
- GB-A- 2 512 317
- JP-A- 2015 205 558
- JP-A- 2015 205 558
- US-A1- 2013 124 047
- US-A1- 2013 124 047
- US-A1- 2013 197 713
- US-A1- 2013 197 713
- US-A1- 2018 370 542
- US-A1- 2018 370 542
- US-A1- 2020 023 843
- US-A1- 2020 023 843

## Description

### TECHNICAL FIELD

The present disclosure relates to the generation of a steering overlay signal. Aspects of the invention relate to a control system for generating a steering overlay signal, to a method for generating a steering overlay signal, to a vehicle, to computer software and a non-transitory computer-readable medium.

### BACKGROUND

It is known to provide a vehicle, such as an automobile, with a lane keep assist system. Current lane keep assist systems trigger a steering intervention to bring the driver back to a lane. A driver may override the steering intervention by applying an override torque to the steering wheel. The override torque must be over a high threshold to ensure the driver is attentive, for example a sufficient torque to intentionally change lane. A length of the steering torque intervention may be undesirable to the driver. However, due to the high threshold the system may be unresponsive to the driver's attempts to cut short the steering intervention. In this respect, patent applications US 2018/370542 A1 and US 2020/023843 A1 disclose a control system and a computer-implemented control method according to the preambles of claims 1 and 11 respectively.

It is an aim of the present invention to address one or more of the disadvantages associated with the prior art.

### SUMMARY OF THE INVENTION

Aspects and embodiments of the invention provide a control system, a control system, a vehicle, a method, computer software and a non-transitory computer-readable medium as claimed in the appended claims.

According to an aspect of the present invention there is provided a control system for controlling generation of a steering wheel overlay signal to control positioning of a host vehicle, the control system comprising one or more controller. The control system is configured to: generate a steering wheel overlay signal for steering the host vehicle toward a target lane position; receive a driver intervention signal indicative of a driver intervention torque applied to a steering wheel of the host vehicle; and determine a driver intervention torque threshold in dependence on an elapsed time since the generation of the steering wheel overlay signal. The control system is configured to mitigate the steering wheel overlay signal in dependence on the driver intervention torque exceeding the driver intervention torque threshold. Beneficially, the driver may remove the steering wheel overlay signal by applying sufficient torque to the wheel, thereby reducing driver inconvenience. Furthermore, the torque threshold may be tailored depending on how long the steering wheel overlay signal has been applied, enabling a reduced threshold to be implemented at particular points at which the driver may more commonly wish to remove the steering wheel overlay signal.

The steering wheel overlay signal may be generated to adjust or control a trajectory of the host vehicle during a steering intervention. According to the invention, the steering wheel overlay signal comprises a lane assist steering overlay for maintaining the host vehicle within the lane of travel, and an intra-lane steering signal for steering the host vehicle toward the target lane position.

The control system is configured to: apply the intra-lane steering signal after the lane assist steering overlay, and reduce the driver intervention torque threshold from a first threshold to a second threshold in dependence on the application of the intra-lane steering signal.

The driver intervention torque threshold may be determined to be reduced in dependence on the elapsed time increasing. Beneficially, the driver may easily remove the overlay signal by applying a lesser torque, thereby reducing driver inconvenience and providing a smoother transition. Provision of this lowered threshold only at the later stage of the steering intervention mitigates the risk of an accidental override at an early critical stage of the steering intervention when initially returning the vehicle to the lane.

Optionally, mitigating the steering wheel overlay signal may comprise removing the steering wheel overlay signal. Alternatively, mitigating the steering wheel overlay signal may comprise reducing the steering wheel overlay signal to provide a lesser overlay.

The driver intervention signal may comprise a torque component indicative of an amount of torque applied, and a duration component indicative of a duration of the applied torque. The driver intervention torque threshold may comprise a torque value threshold and an applied torque duration threshold. Advantageously in this way, short accidental applications of torque by the driver may be disregarded so as not to erroneously trigger an override.

Optionally, the control system is configured to determine the driver intervention torque threshold in dependence on the elapsed time exceeding a threshold time. The threshold time may be a predetermined threshold. The threshold time may be determined to be a sufficient time for the vehicle to initially return safely to the lane. Optionally, the predetermined threshold is in the order of 300ms to 1500ms. Optionally, the predetermined threshold is in the order of 400ms to 600ms. For example, the predetermined threshold may be set substantially close to 500ms. For example, the predetermined threshold may be set substantially close to 550ms. When the elapsed time exceeds the threshold time, the control system may be configured to reduce the driver intervention torque threshold from a first threshold to a second threshold.

In some embodiments, the control system is configured to reduce the driver intervention torque threshold from the first threshold to the second threshold in dependence on the application of the intra-lane steering signal. That is, the driver intervention torque threshold may be reduced for the intra-lane portion of the steering wheel overlay, after the vehicle has returned to or been maintained in the lane and is being aligned and/or positioned within the lane. Beneficially, as soon as the initial critical portion of the steering intervention concludes, the driver may easily override the remainder of the intervention and take back control.

According to the invention, reducing the driver intervention torque threshold comprises reducing the torque value threshold from a first value threshold to a second value threshold. The first, higher torque value threshold may be a sufficient torque to make a deliberate lane change. The second, lower torque value threshold may be a sufficient torque to reposition the vehicle within a lane. For example, the first torque value threshold may be substantially 3Nm, and the second torque value threshold may be substantially 2Nm.

Additionally, or alternatively, reducing the driver intervention torque threshold comprises reducing the applied torque duration threshold from a first higher torque duration threshold to a second lower torque duration threshold. In this way, in the latter part of the steering intervention the duration for which the driver needs to apply torque to the steering wheel to override the steering intervention is reduced. For example, the first higher torque duration threshold may be substantially close to 500ms and the second lower torque duration threshold may be substantially close to 100ms.

In some embodiments, reducing the driver intervention torque threshold comprises reducing both the torque value threshold and the applied torque duration threshold. Advantageously, the vehicle may more quickly respond to a smaller input, allowing the override to feel more natural and responsive to the driver.

Optionally, the control system is configured to determine at least one boundary of a lane of travel; and determine the target lane position for the host vehicle in relation to the at least one boundary. The at least one boundary may comprise a road edge or road markings. Determining the or each boundary of the lane of travel may comprise identifying a road edge or a road marking. The steering wheel overlay signal may be generated in response to the host vehicle crossing or approaching the at least one boundary. The target lane position may be determined to be within the lane a predetermined distance from the at least one boundary. The control system may thus generate the steering wheel overlay signal to steer the host vehicle towards the predetermined distance from the boundary.

Optionally, the control system is configured to: determine a first boundary and a second boundary of the lane of travel, wherein the first boundary and the second boundary are opposing, and control generation of the steering wheel overlay signal to steer the host vehicle towards a mid-point between the first boundary and second boundary. By opposing, it is meant that the first boundary and second boundary are located on each side of the lane of travel respectively. The target lane position may thus be determined to be at the mid-point of the lane of travel.

According to a further aspect of the invention, there is provided a vehicle comprising a control system as described above.

According to another aspect, there is provided a computer-implemented method for controlling generation of a steering wheel overlay signal to control positioning of a host vehicle. The method comprises generating a steering wheel overlay signal for steering the host vehicle toward a target lane position; receiving a driver intervention signal indicative of a driver intervention torque applied to a steering wheel of the host vehicle; determining a driver intervention torque threshold in dependence on an elapsed time since the generation of the steering wheel overlay signal; and mitigating the steering wheel overlay signal in dependence on the driver intervention torque exceeding the driver intervention torque threshold. According to this further aspect of the invention, the steering wheel overlay signal comprises a lane assist steering overlay for maintaining the host vehicle within the lane of travel, and an intra-lane steering signal for steering the host vehicle toward the target lane position. The control system is configured to: apply the intra-lane steering signal after the lane assist steering overlay, and reduce the driver intervention torque threshold from a first threshold to a second threshold in dependence on the application of the intra-lane steering signal.

According to another aspect, there is provided a non-transitory computer-readable medium having a set of instructions stored therein which, when executed, cause a processor to perform the method above.

According to yet another aspect, there is provided computer software that, when executed, is arranged to perform the method above.

Within the scope of this invention, which is defined by the appended claims, embodiments and/or features of any embodiment can be combined unless such features are incompatible.

### BRIEF DESCRIPTION OF THE DRAWINGS

One or more embodiments of the invention will now be described, by way of example only, with reference to the accompanying drawings, in which:
Figure 1 shows a schematic representation of a host vehicle incorporating a control system in accordance with an embodiment of the present invention;
Figure 2 illustrates generation of a lane keep assist torque and an intra-lane torque by the control system;
Figure 3A illustrates the host vehicle travelling on a first section of road having a single lane of travel in each direction;
Figure 3B illustrates the host vehicle travelling on a second section of road having a plurality of lanes of travel in each direction;
Figure 4 illustrates the position and trajectory of the target vehicle in a lane of travel;
Figure 5A shows a schematic representation of a driver intervention signal;
Figure 5B illustrates phases of a steering intervention for the host vehicle;
Figure 6 shows a block diagram illustrating a method according to an embodiment of the present invention; and
Figure 7 is a schematic representation of the control system in accordance with an embodiment of the present invention.

### DETAILED DESCRIPTION

A control system 1 in accordance with an embodiment of the present invention will now be described with reference to the accompanying figures. The control system 1 is installed in a vehicle 2, referred to herein as a host vehicle 2. The host vehicle 2 in the present embodiment is an automobile, such as a wheeled vehicle, but it will be understood that the control system 1 may be used in other types of land vehicle. The host vehicle 2 is described herein with reference to a reference frame comprising a longitudinal axis X, a transverse axis Y and a vertical axis Z. The host vehicle 2 has a longitudinal centreline CL extending along the longitudinal axis X.

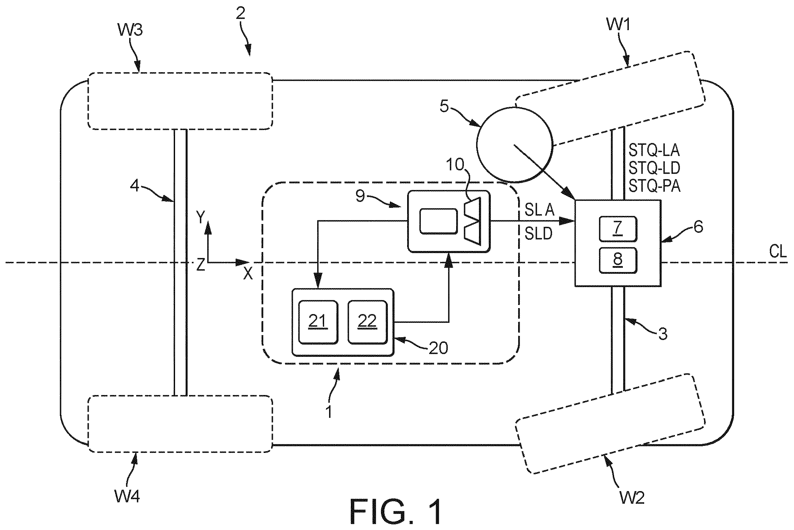

As illustrated in Figure 1, the host vehicle 2 comprises four (4) wheels W1-4. The wheels W1-4 are provided on front and rear axles 3, 4. As illustrated in Figure 1, the first and second wheels W1, W2 provided on the front axle 3 are steerable to control a direction of travel of the host vehicle 2. A driver-operated steering wheel 5 is provided for controlling a steering angle α of the first and second wheels W1, W2 is provided on the front axle 3.

A power assist steering system 6 is provided to generate a steering assist torque STQ-PA to supplement a steering torque applied to the steering wheel 5 by the driver. The power assist steering system 6 comprises a power assist steering controller 7; a torque sensor (not shown) for sensing the steering torque applied by the driver to the steering wheel 5; and a power assist steering actuator 8 for generating the steering assist torque STQ-PA. In the present embodiment, the power assist steering system 6 is an electric power assist steering system (EPAS) comprising an electromechanical actuator operable to generate the steering assist torque. Other types of power assist steering actuator 7 may be used, such as a hydraulic actuator.

The control system 1 comprises a lane departure warning system 9 for identifying when the host vehicle 2 is departing the host vehicle lane of travel LT-n (i.e. the current lane in which the host vehicle 2 is travelling). As described herein, the lane departure warning system 9 is also suitable for identifying when the host vehicle 2 is approaching or traversing a physical limit or a boundary of the road R on which the host vehicle 2 is travelling. The physical limit or boundary of the road R is referred to herein as a road edge RE. The lane departure warning system 9 is configured to output a lane departure signal SLD upon determining that the host vehicle 2 is departing or at risk of departing the host-vehicle lane of travel LT-n or approaching or traversing the road edge RE.

The power assist steering system 6 is configured to implement a lane keep assist (LKA) function for maintaining or returning the host vehicle 2 to the lane of travel LT-n. The control system 1 is configured to control the power assist steering system 6 to generate a lane assist steering overlay STQ-LD in dependence on the lane departure signal SLD. The lane assist steering overlay STQ-LD in the present embodiment comprises or consists of a lane assist steering torque STQ-LD. The lane assist steering torque STQ-LD is applied as a steering wheel torque overlay to the steering assist torque STQ-PA generated by the power assist steering system 6. The lane assist steering torque STQ-LD acts to steer the host vehicle 2 to return to the lane of travel LT-n or avoid departing from the lane of travel LT-n.

Further to maintaining or returning the host vehicle 2 in the lane of travel, the control system 1 may be configured to continue the intervention to steer the host vehicle to a target position in the lane of travel LT. The lane departure warning system 9 is configured to output an intra-lane signal SLA comprising a target position and/or target trajectory α_{T} of the host vehicle 2 in the host-vehicle lane of travel LT. The control system 1 is then configured to control the power assist steering system 6 to generate an intra-lane steering signal STQ-LA in dependence on the intra-lane signal SLD. The intra-lane steering signal STQ-LA in the present embodiment comprises or consists of an intra-lane steering torque STQ-LA. The steering torque request may comprise a torque request direction (+ve or -ve) and optionally also a torque request magnitude.

The lane departure warning system 9 comprises a sensor unit 10 and may comprise an image processing module 11. The sensor unit 10 in the present embodiment comprises an optical camera having a field of view extending forwards in front of the host vehicle 2. The sensor unit 10 may comprise one or more optical cameras, for example a stereo camera. Alternatively, or in addition, the lane departure warning system 9 may utilise other types of sensor, such as a radar system or a LIDAR system, to capture a representation of a region in front of the host vehicle 2. The sensor unit 10 in the present embodiment is located behind a rear-view mirror (not shown) provided at the top of the front windshield. Other mounting locations are possible, for example the sensor unit 10 may be provided behind or in a front grille of the host vehicle 2. The lane departure warning system 9 may optionally receive inputs from one or more vehicle systems, for example to determine if the driver has activated side indicators to signal an intended change the lane of travel LT. The lane departure warning system 9 may be configured to inhibit output of the lane departure signal SLD, for example if the driver activates the directional (side) indicators. The image processing module 11 receives image data captured by the sensor unit 10. The image data is processed to identify features of the road R on which the host vehicle 2 is travelling. The image data is also processed to detect the road edge RE, for example by identifying a transition or boundary between a road surface which may be relatively smooth (for example defined by asphalt, concrete or other surfacing material) and an adjacent surface which may be relatively rough (for example composed of one or more of the following: grass, mud, gravel, sand and snow).

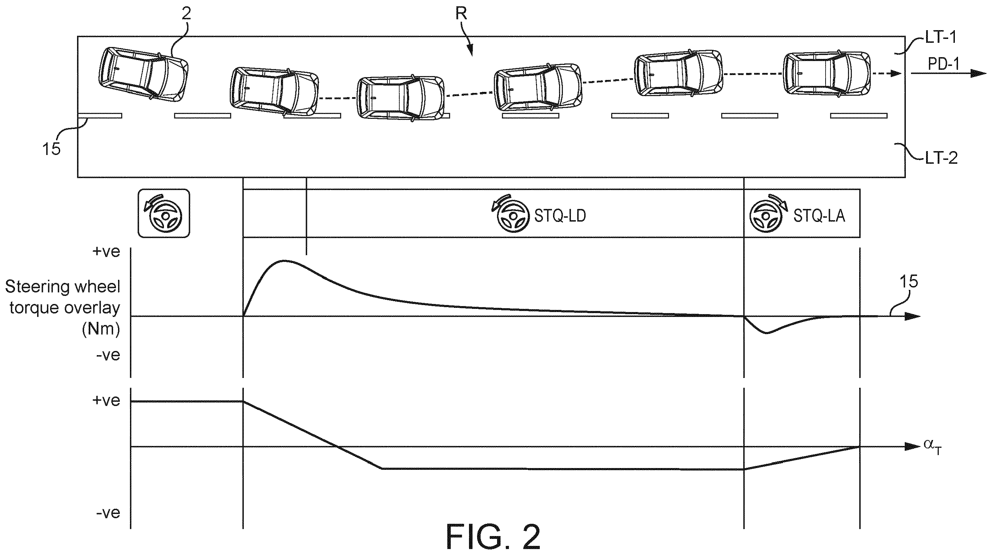

As illustrated in Figure 2, the power assist steering system 6 is operable to implement a steering overlay intervention. The steering overlay intervention comprises a sequence of the lane keep assist function and the intra-lane function.

In use, the power assist steering system 6 may be controlled to generate a lane assist steering torque STQ-LD when the lane departure warning system 9 determines that the host vehicle 2 is departing a lane of travel LT-n. The power assist steering system 6 may then be controlled to generate an intra-lane steering torque STQ-LA to be applied after the lane assist steering torque STQ-LD. The intra-lane steering torque STQ-LA may, for example, be applied in dependence on a determination that the host vehicle 2 has returned to the host-vehicle lane of travel LT-n.

The lane assist steering torque STQ-LD and the intra-lane steering torque STQ-LA are transmitted to the steering wheel 5 to provide a haptic signal to the driver of the host vehicle 2. The lane assist steering torque STQ-LD and the intra-lane steering torque STQ-LA are output to the steering wheel 5 in an appropriate direction to maintain the host vehicle 2 in the host-vehicle lane of travel LT-n. The magnitude of the lane assist steering torque STQ-LD and the intra-lane steering torque STQ-LA are controlled such that, if necessary, the driver can override the lane assist steering torque STQ-LD or the intra-lane steering torque STQ-LA, as will be described. The lane assist steering torque STQ-LD and the intra-lane steering torque STQ-LA may, for example, each have a maximum value of 3Nm although other maximum values may be selected as appropriate.

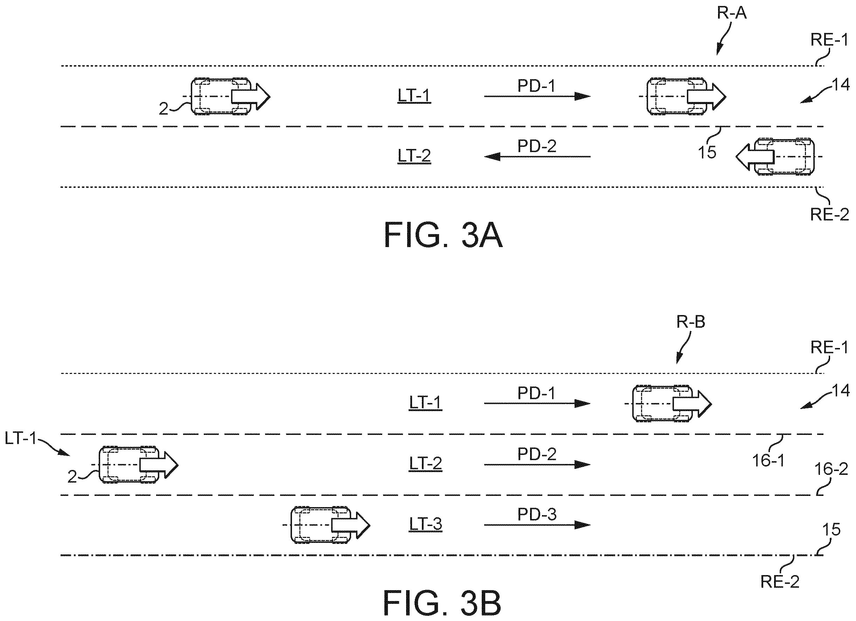

The control system 1 can be implemented when the host vehicle 2 is travelling on a road R having one or more lanes of travel LT-n. By way of example, a first road section R-A is shown in Figure 3A; and a second road section R-B is shown in Figure 3B.

The first and second road sections R-A, R-B can form part of the same road R or may be separate roads R. The first road section R-A is a two-lane road (also known as a "two-lane highway") having first and second lanes of travel LT-1, LT-2 for vehicles travelling in respective first and second directions. The second road section R-B consists of a multiple-lane road (also known as a "multiple-lane highway") having a two or more lane of travel LT-n for vehicles travelling in the same direction. It will be understood that the present invention is not limited to operation on roads having the features illustrated in the first and second road sections R-A, R-B. The first and second road sections R-A, R-B each comprise first and second road edges RE-1, RE-2. In the illustrated example, the first and second road edges RE-1, RE-2 mark the lateral extent of the metalled road surface. It will be understood that one or both of the first and second road edges RE-1, RE-2 may comprise a barrier or partition member, for example separating lanes of a dual carriageway (also known as a "divided highway"). The first and second road sections R-A, R-B may also comprise road markings (denoted herein generally by the reference numeral 14). The first road section R-A has road markings 14 comprising a central road marking 15. As shown in Figure 3B, the central road marking 15 comprises a centre line of the second road section R-B. The road markings 14 on the second road section R-B comprise one or more lane markings 16-n representing a boundary of a lane of travel LT-n for vehicles travelling in the same direction or in opposite directions. The one or more lane markings 16-n may comprise lane lines. In the illustrated arrangement, the second road section R-B comprises first and second lane markings 16-1, 16-2 for demarcating first, second and third lanes of travel LT-1, LT-2, LT-3. The central road marking 15 and/or the one or more lane marking(s) 16-n may each comprise a continuous line (not shown) or an interrupted line (shown in Figures 3A and 3B). The road marking(s) 14 may each comprise one line or multiple lines, for example in the form of a single line or a double line. The central road marking 15 typically differentiates between sections of the first or second road section R-A, R-B intended for travel in opposite directions. Alternatively, or in addition, the road marking(s) 14 may comprise edge lines to indicate an edge of an inboard lane; the edge lines may be separated from the associated first or second road edge RE-1, RE-2. The first road section R-A shown in Figure 3A includes central road markings 15 and lane markings defining a plurality of lanes of travel LT-n.

The lane departure warning system 9 is operable to monitor the image data captured by the sensor unit 10 at least substantially in real time. The image processing module 11 analyses the image data to identify the first road edge RE-1 and/or the second road edge RE-2. The image processing module 11 may, for example, identify changes in the contrast and/or colour of the image data which may be indicative of the first and/or second road edge RE-1, RE-2. Other image processing techniques may be used to identify the first and second road edges RE-1, RE-2. The image processing module 11 is configured also to identify any road markings 14 present on the road R. The image processing module 11 may, for example, utilise image processing techniques to identify continuous or interrupted lines extending in a forward direction (i.e. parallel to the centre line CL of the host vehicle 2). The image processing module 11 is configured to identify the central road markings 15 and the lane markings 16. If road markings 14 are identified, the image processing module 11 identifies the lane of travel LT-n in which the host vehicle 2 is currently travelling (referred to herein as the host-vehicle lane of travel LT-n).

The image processing module 11 is configured to determine a principal axis PD of the lane of travel LT-n in which the host vehicle 2 is currently travelling. The principal axis PD represents a principal direction of travel for vehicles travelling in the lane of travel LT-n. The principal axis PD may be determined in dependence on one or more of the following: the first road edge RE-1, the second road edge RE-2, and the road marking(s) 14. The principal axis PD may, for example, be identified as a direction extending substantially parallel to the road edge RE-n, a central road marking 15 or a lane marking 16. The principal axis PD may be identified as a direction extending substantially parallel to a boundary of the lane of the travel LT-n which is closest to the host vehicle 2, for example closest to the centre line CL of the host vehicle 2). Alternatively, or in addition, the principal axis PD may be determined with reference to two or more features identified in the image data. For example, the principal axis PD may be determined as corresponding to a virtual centreline extending between a first road edge RE-1 and a central road marking 15; or a virtual centreline extending between first and second lane markings 16-1, 16-2. Alternatively, the principal axis PD may be offset from and extend parallel to a virtual centreline of the road R or the lane of travel LT-n. The image processing module 11 may optionally determine a centreline of the or each lane of travel LT-n. Alternatively, or in addition, the principal axis PD may be predefined, for example in map data.

The lane departure warning system 9 identifies the road marking 14 or road edge RE-1, RE-2 closest to the longitudinal centreline CL of the host vehicle 2. If the host vehicle 2 approaches or crosses the identified road marking 14 or road edge RE-1, RE-2, the lane departure warning system 9 determines that the host vehicle 2 is departing from the host-vehicle lane of travel LT-n. The lane departure warning system 9 then outputs the lane departure signal SLD. The lane departure signal SLD includes an indication of whether the host vehicle 2 is traversing the lane markings or road edge on a right-hand side or a left-hand side of the host vehicle 2. The power assist steering system 6 receives the lane departure signal SLD and is operable to generate the lane assist steering torque STQ-LD in a direction suitable for maintaining the host vehicle 2 in the host-vehicle lane of travel LT-n.

Following application of the lane assist steering torque STQ-LD, the lane departure warning system 9 may output the intra-lane signal SLA. The power assist steering system 6 may then be controlled to generate the intra-lane steering torque STQ-LA to control the host vehicle 2 to a target position within the lane of travel LT-n (i.e. at a target lane position).

The intra-lane steering torque STQ-LA can be generated as a separate control function which is implemented upon completion of the lane assist steering torque STQ-LD, for example as a continuation of this function. In a variant, the intra-lane steering torque STQ-LA may be integrated into the lane assist steering torque STQ-LD.

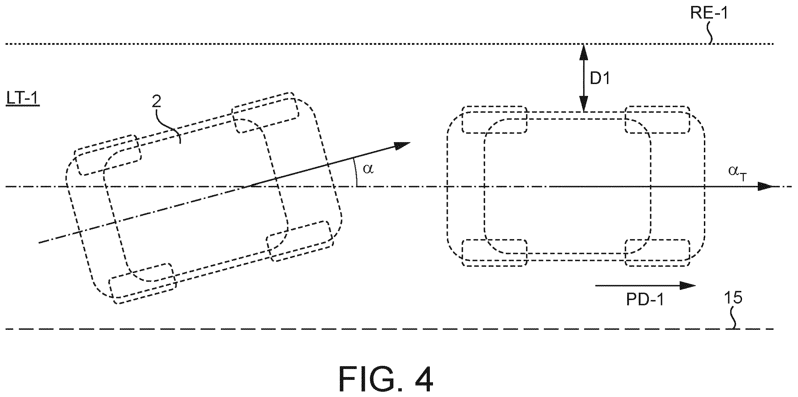

The intra-lane steering torque STQ-LA may be generated to position the host vehicle 2 at least a predetermined distance D1 from a boundary of the lane of travel LT-n. The predetermined distance D1 may be defined relative to the centreline CL of the host vehicle 2 or relative to the side of the host vehicle 2 closest to the identified boundary. The boundary may, for example, correspond to the first or second road edge RE-1, RE-2 or a road marking 14. By way of example, the predetermined distance D1 is shown in relation to a first road edge RE-1 in the scenario illustrated in Figure 4. Alternatively, the control system 1 may generate the intra-lane steering torque STQ-LA to position the host vehicle 2 centrally within the lane of travel LT-n. The intra-lane steering torque STQ-LA may be configured to position the host vehicle 2 at a mid-point between the first and second lane markings 16-1, 16-2 which define opposing sides of the lane of travel LT-n.

At least in certain embodiments, this may facilitate the transition to the scenario in which the host vehicle 2 is controlled exclusively by the driver. The intra-lane function is implemented by a steering wheel torque overlay comprising an intra-lane steering torque STQ-LA applied to the steering assist torque STQ-PA. In the arrangement illustrated in Figure 2, the control system 1 is configured to generate the intra-lane steering torque STQ-LA following application of the lane assist steering torque STQ-LD. The intra-lane steering torque STQ-LA is generated to control the host vehicle 2 at least substantially to position the host vehicle 2 at a predefined position within the lane of travel LT-n. In the present embodiment, the intra-lane steering torque STQ-LA is also generated to control the host vehicle 2 at least substantially to align a trajectory α (or orientation) of the host vehicle 2 with a target trajectory α_{T.} A target position and a target orientation for the host vehicle 2 are represented in Figure 4 by a dashed (phantom) representation of the host vehicle 2. The target trajectory α_{T} in the present embodiment is substantially parallel to the principal axis PD of the lane of travel LT-n. The intra-lane steering torque STQ-LA is transmitted to the steering wheel 5 and provides a haptic signal to the driver. The intra-lane steering torque STQ-LA is output to the steering wheel 5 in an appropriate direction to control the trajectory α of the host vehicle 2 at least substantially to match the target trajectory α_{T}. The intra-lane steering torque STQ-LA is generated in dependence on a comparison of a current trajectory α of the host vehicle 2 in relation to the principal axis PD.

To facilitate the transition to the host vehicle 2 being controlled by the driver, the control system 1 is configured to reduce or remove the magnitude of the intra-lane steering torque STQ-LA such that the steering wheel overlay is eventually removed. The condition for removal of the intra-lane steering torque STQ-LA may be such that the trajectory of the host vehicle is substantially close to the target trajectory α_{T}, the position of the host vehicle is substantially close to the target position, or a lateral velocity of the vehicle is below a threshold such that the host vehicle is travelling substantially parallel in the lane of travel.

The driver may desire to end the steering intervention before completion, for example to intentionally change lanes or reposition the vehicle. It may be burdensome for the driver to wait for the steering intervention to be completed. The control system 1 is configured to remove the steering wheel overlay signal responsive to an active driver override, causing the power assist steering system 6 to remove or reduce the intra-lane steering torque STQ-LA or the lane assist steering torque STQ-LD.

To implement an active driver override, a driver may apply a driver intervention torque to the steering wheel 5. The control system 1 is configured to receive from the steering wheel 5 a driver intervention signal 540 indicative of the torque applied to the steering wheel 5 by the driver.

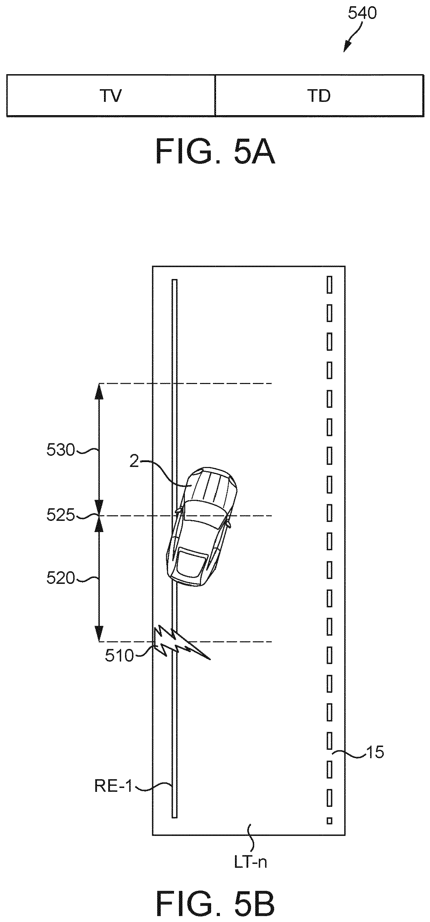

A schematic illustration of a driver intervention signal 540 according to an embodiment is illustrated in Figure 5A. The driver intervention signal 540 comprises a torque component TV. The torque component TV is indicative of an amount of torque applied by the driver to the steering wheel 5. The torque component TV may comprise a value of the applied torque, for example as measured in Newton meters (Nm). The driver intervention signal 540 comprises a duration component TD indicative of a duration of the applied torque. The duration component TD may comprise a time value representing the amount of time for which the driver applies the torque, for example as measured in milliseconds (ms). The duration component TD need not comprise an explicit time value. Rather, the duration of the applied torque may be otherwise derivable from the driver intervention signal 540 for example from a duration of the driver intervention signal 540.

The control system 1 is configured to determine, in dependence on the received driver intervention signal 540, whether to implement an active driver override. The control system 1 is configured to implement an active driver override if the torque applied by the driver exceeds one or more driver intervention torque thresholds. In an embodiment, the control system 1 is configured to implement an active driver override if the torque component TV exceeds a torque value threshold and if the duration component TD exceeds an applied torque duration threshold.

The one or more driver intervention torque thresholds may be adjusted for different phases of the steering intervention. Advantageously, this adjustment enables the driver to more easily take back control during certain periods such as a latter phase of the steering intervention, whilst minimising the risk of an unintended override in an early, critical stage of the intervention.

Figure 5B illustrates a steering intervention for a host vehicle split into two phases 520, 530, each phase being associated with a different driver intervention torque threshold. The host vehicle approaches the road edge RE-1 and at point 510, a steering intervention is triggered. The lane departure warning system 9 outputs the lane departure signal SLD. The control system 1 controls the power assist steering system 6 to generate the lane assist steering torque STQ-LD for maintaining the host vehicle 2 in the host-vehicle lane of travel LT-n.

During the first phase 520 of the steering intervention, a first torque value threshold and a first torque duration threshold are implemented. For the control system 1 to implement an active driver override during the first phase 520, the driver must apply a torque to the steering wheel in excess of the first torque value threshold for a duration exceeding the first torque duration threshold.

During the steering intervention, there is a transition 525 between the first phase 520 and the second phase 530. The transition 525 may be defined in some embodiments by the elapsed time since the steering intervention was triggered at point 510 reaching a threshold time. The threshold time in the illustrated embodiment is 500ms, however it will be appreciated that any suitable threshold time may be implemented. In particular, the threshold time may be selected to allow sufficient time for the host vehicle 2 to be returned to the lane of travel LT-n, or for the lateral velocity of the host vehicle 2 to be directed towards the center of the lane of travel LT-n.

In other embodiments, the transition 525 may be defined as the interface between the inter-lane and intra-lane phases of the steering intervention. That is, the first phase 520 may align with the generation of the lane assist steering torque STQ-LD. The second phase 530 may align with the generation of the intra-lane steering torque STQ-LA.

During the second phase 530 of the steering intervention, a second torque value threshold and a second torque duration threshold are implemented. For the control system 1 to implement an active driver override during the second phase 530, the driver must apply a torque to the steering wheel in excess of the second torque value threshold for a duration exceeding the second torque duration threshold. The second torque value threshold is reduced, i.e. less than, with respect to the first torque value threshold. The second torque duration threshold may be reduced i.e. shorter than with respect to the first torque duration threshold. Optionally, both the second torque value threshold and the second torque duration threshold may be reduced.

For example, the torque value threshold may be reduced from 3Nm to 2Nm, and the torque duration threshold may be reduced from 500ms to 300ms.

In this way, during the second phase 530 of the steering intervention the driver does not need to apply as high a torque to exceed the torque value threshold and implement an active driver override. Furthermore, the driver may not need to exceed the torque value threshold for as long a duration, meaning that the control system 1 will be more quickly responsive to a driver intervention in the second phase 530 of the steering intervention. This may be beneficial as the driver may wish to smoothly take back control before the vehicle is fully aligned, without wishing to apply any significant trajectory change to the vehicle. This may be particularly relevant on curved roads, where the steering intervention may be lengthy due to the final alignment and position conditions being difficult to meet. Furthermore, the driver may wish to align the host vehicle 2 differently within the lane LT-n on a curve.

In some embodiments, the steering intervention may comprise more than two phases. Each additional phase may be associated with an additional torque duration threshold and/or an additional torque value threshold. The torque duration threshold and/or the torque value threshold may be reduced for each subsequent phase of the steering intervention. For example, a third phase subsequent to the second phase 530 may be defined. Upon transitioning from the second phase 530 to the third phase in one example, the torque value threshold may be further reduced from 2Nm to 1Nm.

In alternative embodiments, the steering intervention may not be divided into phases 520, 530. Rather, the control system 1 may be configured to reduce the torque value threshold and/or the torque duration threshold in a continuous manner as the elapsed time since the steering intervention was triggered at point 510 increases. For example, one or both of the torque value threshold and the torque duration threshold may be determined to be inversely proportional to the elapsed time.

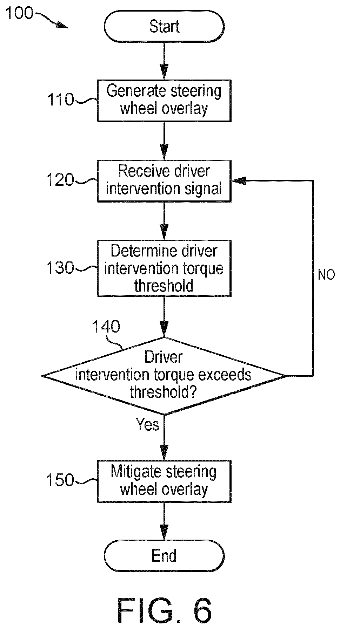

A method 100 representing operation of the control system 1 according to an embodiment of the invention is shown in Figure 6. The method 100 will be described with reference to the steering intervention illustrated in Figure 5.

At block 110 a steering wheel overlay signal is generated for steering the host vehicle toward a target lane position. The steering wheel overlay signal is generated responsive to the lane departure warning system 9 outputting the lane departure signal SLD at point 510, as the host vehicle approaches the road edge RE-1. The steering wheel overlay signal controls the power assist steering system 6 to generate a lane assist steering torque STQ-LD or an intra-lane steering torque STQ-LA to steer the host vehicle towards a target lane position. The target lane position may be for example a mid-point of the lane of travel LT-n between the lane boundaries RE-1, 15.

At block 120, a driver intervention signal 540 indicative of a driver intervention torque applied to a steering wheel of the host vehicle is received by the control system 1. The driver intervention signal 540 comprises a torque component TV and a duration component TD as illustrated in Figure 5A.

At block 130, the control system 1 is configured to determine a driver intervention torque threshold in dependence on one or more attributes of the steering wheel overlay signal. In particular embodiments, the control system 1 is configured to determine the driver intervention torque threshold in dependence on an elapsed time since the generation of the steering wheel overlay signal. The driver intervention torque threshold may be determined in dependence on the phase 520, 530 of the steering intervention. As discussed, the transition 525 may be defined as a threshold time from the start 510 of the steering intervention. Block 130 may then comprise determining whether the elapsed time exceeds the threshold time. If the threshold time is exceeded, the control system 1 is configured to reduce the driver intervention torque threshold from a first threshold to a second threshold. The reduction may apply to a torque value threshold, an applied torque duration threshold or both. In this way, the driver need apply a lesser torque for a lesser duration in order to implement an active driver override in the second phase 530 of the steering intervention compared to the first phase 520 of the steering intervention.

At block 140, the control system 1 is configured to determine whether the driver intervention torque applied to the steering wheel exceeds the driver intervention torque threshold determined in block 130. Block 140 may comprise determining whether the duration component TD exceeds the applied torque duration threshold and whether the torque component TV exceeds the torque value threshold. If the driver intervention torque applied by the driver exceeds the threshold(s) determined in block 130, then the control system determines an active driver override should be implemented and the method proceeds to block 150. If the driver intervention torque applied does not exceed the threshold, the steering intervention continues to proceed.

At block 150, the control system is configured to implement an active driver override by mitigating the steering wheel overlay signal. The steering wheel overlay signal may be mitigated by removing the steering wheel overlay signal, or reducing steering wheel overlay signal. The power assist steering system 6 is consequently controlled to remove or reduce the applied lane assist steering torque STQ-LD or the intra-lane steering torque STQ-LA. Thus, control of the vehicle trajectory may be transitioned back to the driver of the host vehicle 2 before the planned conclusion of the steering intervention.

The method 100 may be performed continuously throughout a steering intervention until an active driver override is successfully implemented in block 150 or until the steering intervention otherwise concludes due to the host vehicle 2 meeting another exit criteria. The other exit criteria may comprise the alignment or trajectory of the host vehicle 2 substantially matching a target alignment or trajectory and/or or a lateral velocity of the host vehicle 2 being below a threshold, as has been described.

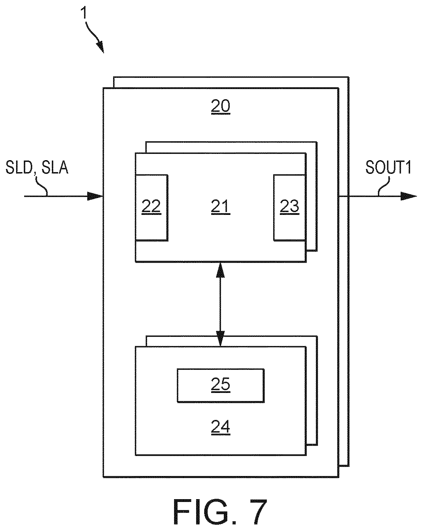

With reference to Figure 7, there is illustrated a simplified example of a control system 1 such as may be adapted to implement the method described herein. The control system 1 comprises one or more controllers 20 and is configured to control generation of a steering wheel overlay signal to control steering of a host vehicle 2. The control system 1 includes one or more controllers 20 and is configured to generate a steering wheel overlay signal for steering the host vehicle 2 toward a target lane position. The control system receives a driver intervention signal 540 indicative of a driver intervention torque applied to a steering wheel 5 of the host vehicle. The control system 1 determines a driver intervention torque threshold in dependence on an elapsed time since the generation of the steering wheel overlay signal. The control system 1 mitigates the steering wheel overlay signal in dependence on the driver intervention torque exceeding the driver intervention torque threshold.

It is to be understood that the or each controller 20 can comprise a control unit or computational device having one or more electronic processors (e.g., a microprocessor, a microcontroller, an application specific integrated circuit (ASIC), etc.), and may comprise a single control unit or computational device, or alternatively different functions of the or each controller 20 may be embodied in, or hosted in, different control units or computational devices. As used herein, the term "controller," "control unit," or "computational device" will be understood to include a single controller, control unit, or computational device, and a plurality of controllers, control units, or computational devices collectively operating to provide the required control functionality. A set of instructions could be provided which, when executed, cause the controller 20 to implement the control techniques described herein (including some or all of the functionality required for the method described herein). The set of instructions could be embedded in said one or more electronic processors of the controller 20; or alternatively, the set of instructions could be provided as software to be executed in the controller 20. A first controller or control unit may be implemented in software run on one or more processors. One or more other controllers or control units may be implemented in software run on one or more processors, optionally the same one or more processors as the first controller or control unit. Other arrangements are also useful.

In the example illustrated in Figure 7, the or each controller 20 comprises at least one electronic processor 21 having one or more electrical input(s) 22 for receiving one or more input signals SLD, SLA, and one or more electrical output(s) 23 for outputting one or more output signals SOUT1. The or each controller 20 further comprises at least one memory device 24 electrically coupled to the at least one electronic processor 21 and having instructions 25 stored therein. The at least one electronic processor 21 is configured to access the at least one memory device 24 and execute the instructions 25 thereon.

The, or each, electronic processor 21 may comprise any suitable electronic processor (e.g., a microprocessor, a microcontroller, an ASIC, etc.) that is configured to execute electronic instructions. The, or each, electronic memory device 24 may comprise any suitable memory device and may store a variety of data, information, threshold value(s), lookup tables or other data structures, and/or instructions therein or thereon. In an embodiment, the memory device 24 has information and instructions for software, firmware, programs, algorithms, scripts, applications, etc. stored therein or thereon that may govern all or part of the methodology described herein. The processor, or each, electronic processor 21 may access the memory device 24 and execute and/or use that or those instructions and information to carry out or perform some or all of the functionality and methodology describe herein.

The at least one memory device 24 may comprise a computer-readable storage medium (e.g. a non-transitory or non-transient storage medium) that may comprise any mechanism for storing information in a form readable by a machine or electronic processors/computational devices, including, without limitation: a magnetic storage medium (e.g. floppy diskette); optical storage medium (e.g. CD-ROM); magneto optical storage medium; read only memory (ROM); random access memory (RAM); erasable programmable memory (e.g. EPROM ad EEPROM); flash memory; or electrical or other types of medium for storing such information/instructions.

Example controllers 20 have been described comprising at least one electronic processor 21 configured to execute electronic instructions stored within at least one memory device 24, which when executed causes the electronic processor(s) 21 to carry out the method as hereinbefore described. However, it is contemplated that the present invention is not limited to being implemented by way of programmable processing devices, and that at least some of, and in some embodiments all of, the functionality and or method steps of the present invention may equally be implemented by way of non-programmable hardware, such as by way of non-programmable ASIC, Boolean logic circuitry, etc.

It will be appreciated that various changes and modifications can be made to the present invention without departing from the scope of the present invention, as defined by the appended claims.

## Claims

1. A control system (1) for controlling generation of a steering wheel overlay signal to control positioning of a host vehicle (2), the control system (1) comprising one or more controller, the control system (1) configured to:
generate a steering wheel overlay signal for steering the host vehicle (2) toward a target lane position;
receive a driver intervention signal (540) indicative of a driver intervention torque applied to a steering wheel (5) of the host vehicle (2); and
determine a driver intervention torque threshold in dependence on an elapsed time since the generation of the steering wheel overlay signal,
wherein the control system (1) is configured to mitigate the steering wheel overlay signal in dependence on the driver intervention torque exceeding the driver intervention torque threshold ,
**characterized in that** the steering wheel overlay signal comprises a lane assist steering overlay for maintaining the host vehicle (2) within the lane of travel, and an intra-lane steering signal for steering the host vehicle (2) toward the target lane position, and wherein the control system (1) is configured to:
apply the intra-lane steering signal after the lane assist steering overlay, and
reduce the driver intervention torque threshold from a first threshold to a second threshold in dependence on the application of the intra-lane steering signal.

2. A control system as claimed in claim 1, wherein the driver intervention signal (540) comprises a torque component indicative of an amount of torque applied, and a duration component indicative of a duration of the applied torque.

3. A control system as claimed in claim 2, wherein the driver intervention torque threshold comprises a torque value threshold and an applied torque duration threshold.

4. A control system as claimed in any one of the preceding claims, wherein the control system (1) is configured to determine the driver intervention torque threshold in dependence on the elapsed time exceeding a threshold time.

5. A control system as claimed in claim 4, wherein the control system (1) is configured to reduce the driver intervention torque threshold from a first threshold to a second threshold in dependence on the elapsed time exceeding a threshold time.

6. A control system as claimed in any preceding claim, wherein the control system (1) is configured to:
determine at least one boundary of a lane of travel; and
determine the target lane position for the host vehicle (2) in relation to the at least one boundary

7. A control system as claimed in claim 6, wherein the control system (1) is configured to control generation of the steering wheel overlay signal to steer the host vehicle (2) towards at a predetermined distance from the at least one boundary.

8. A control system as claimed in claim 6, wherein the control system (1) is configured to:
determine a first boundary and a second boundary of the lane of travel, wherein the first boundary and the second boundary are opposing; and
control generation of the steering wheel overlay signal to steer the host vehicle (2) towards a mid-point between the first boundary and second boundary.

9. A control system as claimed in any one of claims 6 to 8, wherein determining the or each boundary of the lane of travel comprises identifying a road marking or a road edge.

10. A vehicle (2) comprising a control system as claimed in any one of the preceding claims.

11. A computer-implemented method for controlling generation of a steering wheel overlay signal to control positioning of a host vehicle (2), the method comprising:
generating (110) a steering wheel overlay signal for steering the host vehicle (2) toward a target lane position;
receiving (120) a driver intervention signal indicative of a driver intervention torque applied to a steering wheel (5) of the host vehicle (2);
determining (130) a driver intervention torque threshold in dependence on an elapsed time since the generation of the steering wheel overlay signal, and
mitigating (150) the steering wheel overlay signal in dependence on the driver intervention torque exceeding the driver intervention torque threshold ,
**characterized in that** the steering wheel overlay signal comprises a lane assist steering overlay for maintaining the host vehicle (2) within the lane of travel, and an intra-lane steering signal for steering the host vehicle (2) toward the target lane position, wherein the method comprises:
applying the intra-lane steering signal after the lane assist steering overlay; and
reducing the driver intervention torque threshold from a first threshold to a second threshold in dependence on the application of the intra-lane steering signal.

12. A non-transitory computer-readable medium having a set of instructions stored therein which, when executed, cause a processor to perform the method according to claim 11.

13. Computer software that, when executed, is arranged to perform a method according to claim 11.

## Patentansprüche

1. Steuersystem (1) zum Steuern einer Erzeugung eines Lenkradüberlagerungssignals, um ein Positionieren eines Host-Fahrzeugs (2) zu steuern, das Steuersystem (1) umfassend eine oder mehrere Steuerungen, wobei das Steuersystem (1) konfiguriert ist zum:
Erzeugen eines Lenkradüberlagerungssignals zum Lenken des Host-Fahrzeugs (2) in Richtung einer Zielspurposition;
Empfangen eines Fahrereingriffssignals (540), das ein auf ein Lenkrad (5) des Host-Fahrzeugs (2) angelegtes Fahrereingriffsdrehmoment anzeigt; und
Bestimmen eines Fahrereingriffsdrehmomentschwellenwerts in Abhängigkeit von einer verstrichenen Zeit seit der Erzeugung des Lenkradüberlagerungssignals,
wobei das Steuersystem (1) konfiguriert ist, um das Lenkradüberlagerungssignal in Abhängigkeit davon abzuschwächen, dass das Fahrereingriffsdrehmoment den Fahrereingriffsdrehmomentschwellenwert überschreitet,
**dadurch gekennzeichnet, dass** das Lenkradüberlagerungssignal eine Spurhalteassistentlenküberlagerung zum Halten des Host-Fahrzeugs (2) innerhalb der Fahrspur und ein spurinternes Lenksignal zum Lenken des Host-Fahrzeugs (2) in Richtung der Zielfahrspurposition umfasst, und wobei das Steuersystem (1) konfiguriert ist zum:
Anwenden des spurinternen Lenksignals nach der Spurhalteassistentlenküberlagerung, und
Reduzieren des Fahrereingriffsdrehmomentschwellenwerts von einem ersten Schwellenwert auf einen zweiten Schwellenwert in Abhängigkeit von der Anwendung des spurinternen Lenksignals.

2. Steuersystem nach Anspruch 1, wobei das Fahrereingriffssignal (540) eine Drehmomentkomponente, die einen Betrag an angelegtem Drehmoment angibt, und eine Dauerkomponente, die eine Dauer des angelegten Drehmoments angibt, umfasst.

3. Steuersystem nach Anspruch 2, wobei der Fahrereingriffsdrehmomentschwellenwert einen Drehmomentwertschwellenwert und einen Schwellenwert für die Dauer des angelegten Drehmoments umfasst.

4. Steuersystem nach einem der vorstehenden Ansprüche, wobei das Steuersystem (1) konfiguriert ist, um den Fahrereingriffsdrehmomentschwellenwert in Abhängigkeit davon zu bestimmen, dass die verstrichene Zeit eine Schwellenwertzeit überschreitet.

5. Steuersystem nach Anspruch 4, wobei das Steuersystem (1) konfiguriert ist, um den Fahrereingriffsdrehmomentschwellenwert in Abhängigkeit davon, dass die verstrichene Zeit eine Schwellenwertzeit überschreitet, von einem ersten Schwellenwert auf einen zweiten Schwellenwert zu reduzieren.

6. Steuersystem nach einem der vorstehenden Ansprüche, wobei das Steuersystem (1) konfiguriert ist zum:
Bestimmen von mindestens einer Grenze einer Fahrspur; und
Bestimmen der Zielspurposition für das Host-Fahrzeug (2) in Bezug auf die mindestens eine Grenze.

7. Steuersystem nach Anspruch 6, wobei das Steuersystem (1) konfiguriert ist, um die Erzeugung des Lenkradüberlagerungssignals zu steuern, um das Host-Fahrzeug (2) in Richtung einer vorbestimmten Entfernung von der mindestens einen Grenze zu lenken.

8. Steuersystem nach Anspruch 6, wobei das Steuersystem (1) konfiguriert ist zum:
Bestimmen einer ersten Grenze und einer zweiten Grenze der Fahrspur, wobei die erste Grenze und die zweite Grenze einander gegenüberliegen; und
Steuern der Erzeugung des Lenkradüberlagerungssignals, um das Host-Fahrzeug (2) in Richtung eines Mittelpunkts zwischen der ersten Grenze und der zweiten Grenze zu lenken.

9. Steuersystem nach einem der Ansprüche 6 bis 8, wobei das Bestimmen der oder jeder Grenze der Fahrspur ein Identifizieren einer Straßenmarkierung oder eines Straßenrands umfasst.

10. Fahrzeug (2), umfassend ein Steuersystem nach einem der vorstehenden Ansprüche.

11. Computerimplementiertes Verfahren zum Steuern der Erzeugung eines Lenkradüberlagerungssignals zum Steuern des Positionierens eines Host-Fahrzeugs (2), das Verfahren umfassend:
Erzeugen (110) eines Lenkradüberlagerungssignals zum Lenken des Host-Fahrzeugs (2) in Richtung einer Zielspurposition;
Empfangen (120) eines Fahrereingriffssignals, das ein auf ein Lenkrad (5) des Host-Fahrzeugs (2) angelegtes Fahrereingriffsdrehmoment anzeigt;
Bestimmen (130) eines Fahrereingriffsdrehmomentschwellenwerts in Abhängigkeit von einer seit der Erzeugung des Lenkradüberlagerungssignals verstrichenen Zeit, und
Abschwächen (150) des Lenkradüberlagerungssignals in Abhängigkeit davon, dass das Fahrereingriffsdrehmoment den Fahrereingriffsdrehmomentschwellenwert überschreitet,
**dadurch gekennzeichnet, dass** das Lenkradüberlagerungssignal eine Spurassistentlenküberlagerung zum Halten des Host-Fahrzeugs (2) innerhalb der Fahrspur und ein spurinternes Lenksignal zum Lenken des Host-Fahrzeugs (2) in Richtung der Zielspurposition umfasst, wobei das Verfahren umfasst:
Anwenden des spurinternen Lenksignals nach der Spurhalteassistentlenküberlagerung; und
Reduzieren des Fahrereingriffsdrehmomentschwellenwerts von einem ersten Schwellenwert auf einen zweiten Schwellenwert in Abhängigkeit von der Anwendung des spurinternen Lenksignals.

12. Nichtflüchtiges computerlesbares Medium, das einen Satz von darin gespeicherten Anweisungen aufweist, die, wenn sie ausgeführt werden, einen Prozessor veranlassen, das Verfahren nach Anspruch 11 durchzuführen.

13. Computersoftware, die, wenn sie ausgeführt wird, eingerichtet ist, um ein Verfahren nach Anspruch 11 durchzuführen.

## Revendications

1. Système de commande (1) destiné à commander la génération d'un signal de superposition de volant de direction afin de commander le positionnement d'un véhicule hôte (2), le système de commande (1) comprenant un ou plusieurs dispositifs de commande, le système de commande (1) étant configuré pour :
générer un signal de superposition de volant de direction destiné à diriger le véhicule hôte (2) vers une position de voie cible ;
recevoir un signal d'intervention du conducteur (540) indiquant un couple d'intervention du conducteur appliqué à un volant de direction (5) du véhicule hôte (2) ; et
déterminer un seuil de couple d'intervention du conducteur en fonction d'un temps écoulé depuis la génération du signal de superposition de volant de direction,
dans lequel le système de commande (1) est configuré pour atténuer le signal de superposition de volant de direction en fonction du couple d'intervention du conducteur dépassant le seuil de couple d'intervention du conducteur,
**caractérisé en ce que** le signal de superposition de volant de direction comprend une superposition de direction d'assistance de voie destinée à maintenir le véhicule hôte (2) dans la voie de circulation, et un signal de direction intra-voie destiné à diriger le véhicule hôte (2) vers la position de voie cible, et dans lequel le système de commande (1) est configuré pour :
appliquer le signal de direction intra-voie après la superposition de direction d'assistance de voie, et
réduire le seuil de couple d'intervention du conducteur d'un premier seuil à un second seuil en fonction de l'application du signal de direction intra-voie.

2. Système de commande selon la revendication 1, dans lequel le signal d'intervention du conducteur (540) comprend un composant de couple indiquant une quantité de couple appliquée, et un composant de durée indiquant une durée du couple appliqué.

3. Système de commande selon la revendication 2, dans lequel le seuil de couple d'intervention du conducteur comprend un seuil de valeur de couple et un seuil de durée de couple appliqué.

4. Système de commande selon l'une quelconque des revendications précédentes, dans lequel le système de commande (1) est configuré pour déterminer le seuil de couple d'intervention du conducteur en fonction du temps écoulé dépassant un temps seuil.

5. Système de commande selon la revendication 4, dans lequel le système de commande (1) est configuré pour réduire le seuil de couple d'intervention du conducteur d'un premier seuil à un second seuil en fonction du temps écoulé dépassant un temps seuil.

6. Système de commande selon l'une quelconque revendication précédente, dans lequel le système de commande (1) est configuré pour :
déterminer au moins l'une limite d'une voie de circulation ; et
déterminer la position de voie cible pour le véhicule hôte (2) par rapport à l'au moins une limite

7. Système de commande selon la revendication 6, dans lequel le système de commande (1) est configuré pour commander la génération du signal de superposition de volant de direction afin de diriger le véhicule hôte (2) à une distance prédéterminée à partir de l'au moins une limite.

8. Système de commande selon la revendication 6, dans lequel le système de commande (1) est configuré pour :
déterminer une première limite et une seconde limite de la voie de circulation, dans lequel la première limite et la seconde limite sont opposées ; et
commander la génération du signal de superposition de volant de direction pour diriger le véhicule hôte (2) vers un point médian entre la première limite et la seconde limite.

9. Système de commande selon l'une quelconque des revendications 6 à 8, dans lequel la détermination de la ou de chaque limite de la voie de circulation comprend l'identification d'un marquage routier ou d'un bord de route.

10. Véhicule (2) comprenant un système de commande selon l'une quelconque des revendications précédentes.

11. Procédé mis en œuvre par ordinateur destiné à commander la génération d'un signal de superposition de volant de direction afin de commander le positionnement d'un véhicule hôte (2), le procédé comprenant :
la génération (110) d'un signal de superposition de volant de direction destiné à diriger le véhicule hôte (2) vers une position de voie cible ;
la réception (120) d'un signal d'intervention du conducteur indiquant un couple d'intervention du conducteur appliqué à un volant de direction (5) du véhicule hôte (2) ;
la détermination (130) d'un seuil de couple d'intervention du conducteur en fonction d'un temps écoulé depuis la génération du signal de superposition de volant de direction, et
l'atténuation (150) du signal de superposition de volant de direction en fonction du couple d'intervention du conducteur dépassant le seuil de couple d'intervention du conducteur,
**caractérisé en ce que** le signal de superposition de volant de direction comprend une superposition de direction d'assistance de voie destinée à maintenir le véhicule hôte (2) dans la voie de circulation, et un signal de direction intra-voie destiné à diriger le véhicule hôte (2) vers la position de voie cible, dans lequel le procédé comprend :
l'application du signal de direction intra-voie après la superposition de direction d'assistance de voie ; et
la réduction du seuil de couple d'intervention du conducteur d'un premier seuil à un second seuil en fonction de l'application du signal de direction intra-voie.

12. Support lisible par ordinateur non transitoire ayant un ensemble d'instructions stockées à l'intérieur de celui-ci qui, lorsqu'elles sont exécutées, amènent un processeur à effectuer le procédé selon la revendication 11.

13. Logiciel informatique qui, lorsqu'il est exécuté, est agencé pour effectuer un procédé selon la revendication 11.
